# EUROPEAN PATENT APPLICATION

(11) **EP 2 485 505 A1**
(43) Date of publication of application: **08.08.2012**
(21) Application number: 10820718.4
(22) Date of filing: 01.10.2010
(51) Int. Cl.: H04W 4/02, H04W 64/00

(54) **MOBILE COMMUNICATION METHOD, MOBILE MANAGEMENT NODE, AND MOBILE STATION**

(30) Priority: 02.10.2009 JP 2009231033
(71) Applicant: NTT DOCOMO, INC., Chiyoda-ku Tokyo 100-6150 (JP)
(72) Inventor: NISHIDA, Katsutoshi, Tokyo 100-6150 (JP); ISHII, Minami, Tokyo 100-6150 (JP); HAPSARI, Wuri Andarmawanti, Tokyo 100-6150 (JP); MIAO, Zhen, Tokyo 100-6150 (JP)
(74) Representative: HOFFMANN EITLE
(86) International application number: PCT/JP2010/067273
(87) International publication number: WO 2011/040604

(57) **Abstract**

The mobile communication method according to the present invention includes: a step of acquiring and storing, by a mobile management node MME, Cell-ID for identifying a cell in which a mobile station UE exists, in an MM process; a step of transmitting, by the mobile management node MME, a positioning process signal "Location Request" including the stored Cell-ID to a positioning calculation node E-SMLC, in an LCS process; and a step of performing, by the positioning calculation node E-SMLC, a positioning process of the mobile station UE, using the Cell-ID included in the received positioning process signal "Location Request", in the LCS process.

## Description

### TECHNICAL FIELD

The present invention relates to a mobile communication method, a mobile management node, and a mobile station.

### BACKGROUND ART

A mobile communication system defined by 3GPP is configured to be able to realize a location information provision service (LCS: LoCation Services) that provides the location information of a mobile station UE by using LPP (LTE Positioning Protocol)/LPPa (LTE Positioning Protocol annex).

### PRIOR ART DOCUMENT

### NON-PATENT DOCUMENT

Non-Patent Document 1: 3GPP TS23.271 v9.0.0
Non-Patent Document 2: 3GPP TS36.305 v1.0.0
Non-Patent Document 3: 3GPP TS24.401 v8.6.0

### SUMMARY OF THE INVENTION

### PROBLEMS TO BE SOLVED BY THE INVENTION

Here, according to the aforementioned LCS, a positioning calculation node E-SMLC (Enhanced-Serving Mobile Location Centre) is configured to perform a positioning process such as positioning calculation of a mobile station UE by using Cell-ID (hereinafter, referred to as the Cell-ID of the mobile station UE) for identifying a cell in which the mobile station UE exists.

However, a problem was that the 3GPP does not clearly specify how the positioning calculation node E-SMLC must acquire the Cell-ID of the mobile station UE according to the LCS.

Thus, the present invention has been achieved in view of the above problem, and an object thereof is to provide a mobile communication method, a mobile management node, and a mobile station, capable of notifying the positioning calculation node E-SMLC of the Cell-ID of the mobile station UE by an optimum method, according to the LCS.

### MEANS FOR SOLVING THE PROBLEM

A first characteristic of the present invention is summarized as a mobile communication method including: a step of acquiring and storing, by a mobile management node, a cell ID for identifying a cell in which a mobile station exists, in a mobile management process; a step of transmitting, by the mobile management node, a positioning process signal including the stored cell ID to a positioning calculation node, in a location information provision service process; and a step of performing, by the positioning calculation node, a positioning process of the mobile station using the cell ID included in the received positioning process signal, in the location information provision service process.

A second characteristic of the present invention is summarized as a mobile communication method including: a step A of acquiring, by a mobile management node, a cell ID for identifying a cell in which a mobile station exists, in a location information provision service process; a step B of transmitting, by the mobile management node, a positioning process signal including the acquired cell ID to a positioning calculation node, in the location information provision service process; and a step C of performing, by the positioning calculation node, a positioning process of the mobile station, using the cell ID included in the received positioning process signal, in the location information provision service process.

A third characteristic of the present invention is summarized as a mobile management node including a mobile management process function configured to acquire and store a cell ID for identifying a cell in which a mobile station exists, in a mobile management process, and a location information provision service process function configured to transmit a positioning process signal including the cell ID stored in the mobile management process function, to a positioning calculation node configured to perform a positioning process of the mobile station, in a location information provision service process.

A fourth characteristic of the present invention is summarized as a mobile management node including a location information provision service process function configured to acquire a cell ID for identifying a cell in which a mobile station exists, and then transmit a positioning process signal including the acquired cell ID to a positioning calculation node configured to perform a positioning process of the mobile station, in a location information provision service process.

A fifth characteristic of the present invention is summarized as a mobile station including a location information provision service process function configured to receive a positioning notification request transmitted by a mobile management node, and then transmitting a positioning notification response including the fact that positioning is allowed, when positioning of the mobile station is allowed, and a cell ID for identifying a cell in which the mobile station exists to the mobile management node, or transmit a positioning notification response including the fact that positioning is not allowed, when positioning of the mobile station is not allowed, to the mobile management node, in a location information provision service process.

### EFFECT OF THE INVENTION

As described above, according to the present invention, it is possible to provide a mobile communication method, a mobile management node, and a mobile station that can notify Cell-ID of a mobile station UE to a positioning calculation node E-SMLC by an optimum method, according to LCS.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a diagram for explaining a function of a mobile management node according to the first embodiment of the present invention.
[Fig. 3] Fig. 3 is a diagram for explaining an operation of the mobile communication system according to the first embodiment of the present invention.
[Fig. 4] Fig. 4 is a sequence diagram for explaining an operation of the mobile communication system according to the first embodiment of the present invention.
[Fig. 5] Fig. 5 is a sequence diagram for explaining an operation of the mobile communication system according to the first embodiment of the present invention.
[Fig. 6] Fig. 6 is a sequence diagram for explaining an operation of the mobile communication system according to the first embodiment of the present invention.
[Fig. 7] Fig. 7 is a sequence diagram for explaining an operation of the mobile communication system according to the first embodiment of the present invention.
[Fig. 8] Fig. 8 is a sequence diagram for explaining an operation of the mobile communication system according to the first embodiment of the present invention.
[Fig. 9] Fig. 9 is a diagram for explaining a function of a mobile management node according to a second embodiment of the present invention.
[Fig. 10] Fig. 10 is a diagram for explaining an operation of a mobile communication system according to the second embodiment of the present invention.
[Fig. 11] Fig. 11 is a sequence diagram for explaining an operation of the mobile communication system according to the second embodiment of the present invention.
[Fig. 12] Fig. 12 is a sequence diagram for explaining an operation of the mobile communication system according to the second embodiment of the present invention.
[Fig. 13] Fig. 13 is a diagram for explaining a function of the mobile management node according to the first embodiment of the present invention.

### BEST MODES FOR CARRYING OUT THE INVENTION

### (Mobile communication system according to first embodiment of the present invention)

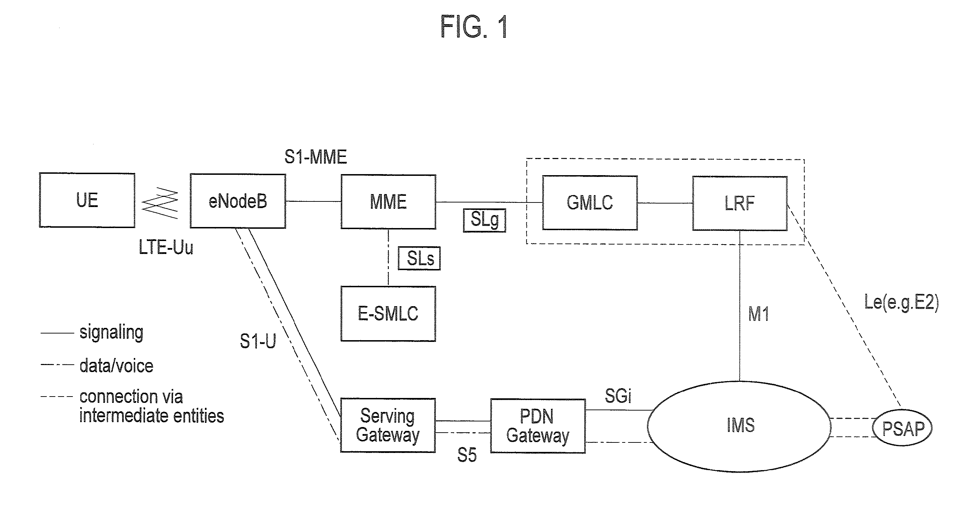

A mobile communication system according to a first embodiment of the present invention is described with reference to Fig. 1 through Fig. 8.

The mobile communication system according to the present embodiment is configured to be able to provide LCS (location information service) to a mobile station UE. Specifically, the mobile communication system according to the present embodiment is configured to be able to provide "LPP PDU" concerning the mobile station UE to the mobile station UE by using LPP/LPPa.

As shown in Fig. 1, the mobile communication system according to the present embodiment includes a radio base station eNB, a mobile management node MME (Mobility Management Entity), a positioning calculation node E-SMLC, a gateway device S-GW (Serving Gateway), a gateway device P-GW (PDN Gateway), a node GMLC (Gateway Mobile Location Center), a node LRF (Location Retrieval Function), IMS (IP Multimedia Subsystem), and PSAP (Public Safety Answer Point).

The interface between the mobile station UE and the radio base station eNB is an LTE-Uu interface, which is configured to set a signaling connection and a data signal/voice signal connection between the mobile station UE and the radio base station eNB.

The interface between the radio base station eNB and the gateway device S-GW is an S1-U interface, which is configured to set a signaling connection and a data signal/voice signal connection between the radio base station eNB and the gateway device S-GW.

The interface between the gateway device S-GW and the gateway device P-GW is an S5 interface, which is configured to set a signaling connection and a data signal/voice signal connection between the gateway device S-GW and the gateway device P-GW.

The interface between the gateway device P-GW and the IMS is an SGi interface, which is configured to set a signaling connection and a data signal/voice signal connection between the gateway device P-GW and the IMS.

The interface between the radio base station eNB and the mobile management node MME is an S1-MME interface, which is configured to set a signaling connection between the radio base station eNB and the mobile management node MME.

The interface between the mobile management node MME and the positioning calculation node E-SMLC is an SLs interface, which is configured to set a signaling connection between the mobile management node MME and the positioning calculation node E-SMLC.

The interface between the mobile management node MME and the node GMLC is an SLg interface, which is configured to set a signaling connection between the mobile management node MME and the node GMLC.

The interface between the node LRF and the IMS is an M1 interface, which is configured to set a signaling connection between the node LRF and the IMS.

The interface between the node LRF and the PSAP is an Le (for example, E2) interface, which is configured to set a signaling connection between the node LRF and the PSAP via a single or multiple intermediate nodes.

In the mobile communication system according to the present embodiment, the function for performing the positioning process of the mobile station UE is configured to be provided in the positioning calculation node E-SMLC rather than the radio base station eNB.

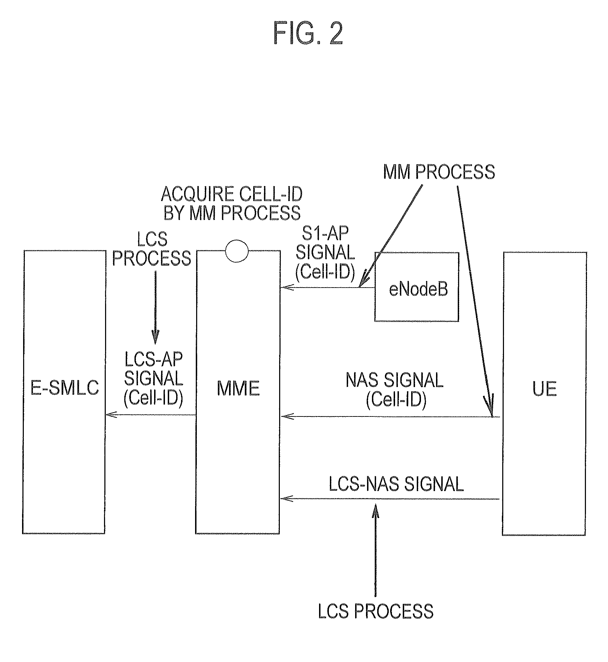

Next, an outline of a function of the mobile management node MME according to the present embodiment is explained with reference to Fig. 2.

The mobile management node MME includes an MM (Mobility Management) process function and an LCS process function.

As shown in Fig. 2, the MM processing unit of the mobile management node MME is configured to receive an S1-AP signal including Cell-ID of the mobile station UE from the radio base station eNodeB in an MM process.

Furthermore, the MM processing unit of the mobile management node MME is configured to receive a NAS (Non Access Stratum) signal including the Cell-ID of the mobile station UE from the mobile station UE in the MM process.

Furthermore, the LCS processing unit of the mobile management node MME is configured to receive an LCS-NAS signal from the mobile station UE in an LCS process. Here, the Cell-ID of the mobile station UE is not included in the LCS-NAS signal.

Furthermore, the LCS processing unit of the mobile management node MME is configured to transmit an LCS-AP signal including the Cell-ID of the mobile station UE included in the S1-AP signal or the NAS signal received in the MM process, to the positioning calculation node E-SMLC, in the LCS process.

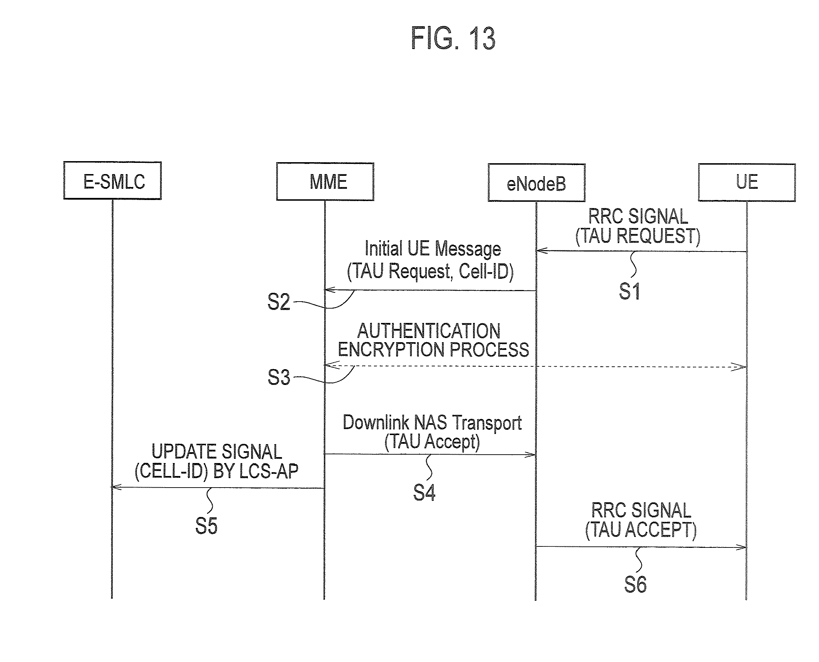

An operation when the mobile management node MME receives the NAPS signal from the mobile station UE is explained with reference to Fig. 13.

As shown in Fig. 13, in step S1, the mobile station UE transmits an RRC signal including "TAU Request" to the radio base station eNodeB, and in step S2, the radio base station eNodeB. transmits "Initial UE Message" including the Cell-ID of the mobile station UE and the "TAU Request" to the mobile management node MME.

In step S3, an authentication encryption process is performed between the mobile management node MME and the mobile station UE.

In step S4, the mobile management node MME transmits "Downlink NAS Transport" including "TAU Accept" to the radio base station eNodeB.

In step S5, the mobile management node MME transmits an update signal (LCS-AP signal) including the Cell-ID to the positioning calculation node E-SMLC.

In step S6, the radio base station eNodeB transmits an RRC signal including the "TAU Accept" to the mobile station UE.

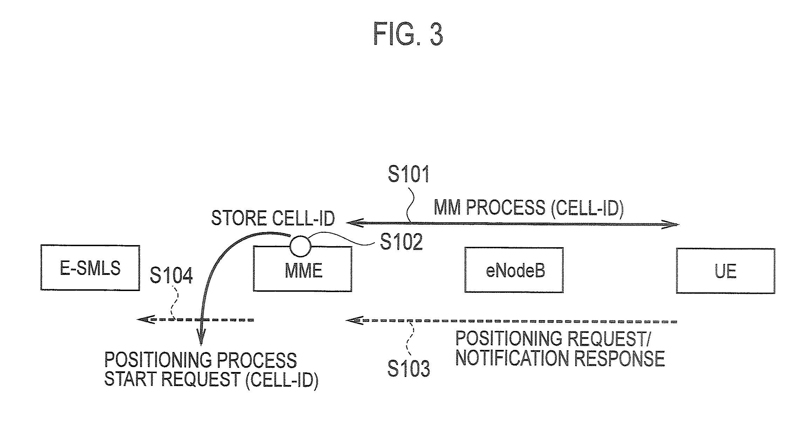

Here, an outline of the operation of the mobile communication system according to the first embodiment of the present invention is explained with reference to Fig. 3.

As shown in Fig. 3, in step S101, the MM process is performed between the mobile management node MME and the mobile station UE, and in step S102, the mobile management node MME acquires and stores the Cell-ID of the mobile station UE.

Following this, in step S103, the mobile management node MME receives a positioning request or a positioning notification response transmitted by the mobile station UE, and then in step S104, the mobile management node MME transmits, to the positioning calculation node E-SMLC, a positioning process start request (positioning process signal) including the Cell-ID of the mobile station UE that is stored in step S102.

The positioning calculation node E-SMLC performs a positioning process of the mobile station UE by using the Cell-ID of the mobile station UE included in the received positioning process start request.

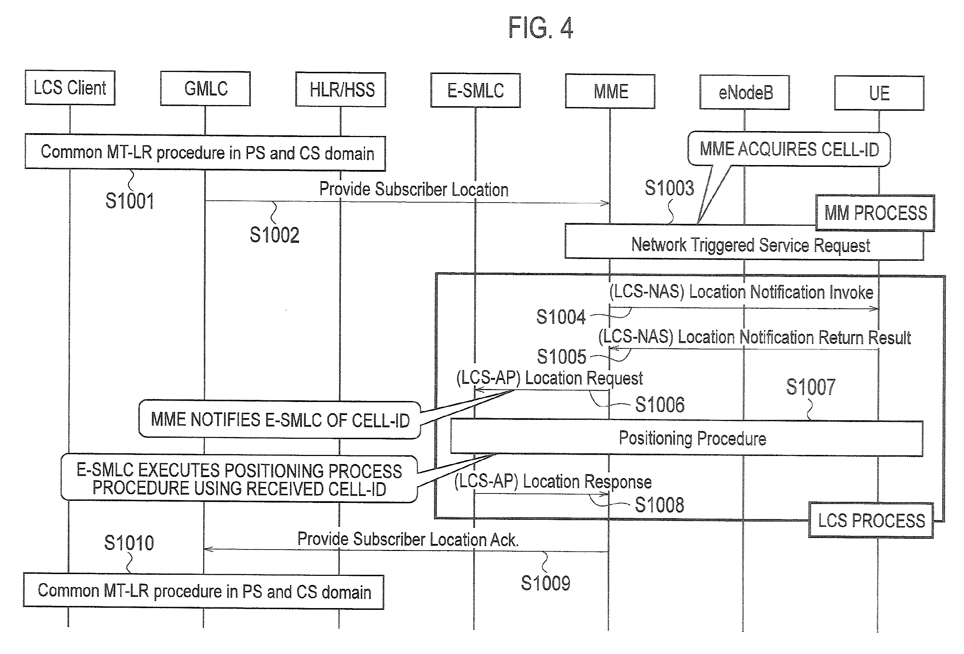

Hereinafter, the details of the operation of the mobile communication system according to the first embodiment of the present invention are explained with reference to Fig. 4 through Fig. 8.

Firstly, an operation of "EPC Mobile Terminating Location Request (EPC-MT-LR)" of the mobile communication system according to the first embodiment of the present invention is explained with reference to Fig. 4 through Fig. 7. In the example shown in Fig. 4, the mobile station UE is in a non-communicating state (idle state).

As shown in Fig. 4, in step S1001, a "Common MT-LR" procedure of a PS (Packet Switching)/CS (Circuit Switching) domain is performed among LCS Client, the node GMLC, and a node HLR (Home Location Register)/HSS (Home Subscriber Server).

In step S1002, the node GMLC transmits "Provide Subscriber Location" to the mobile management node MME.

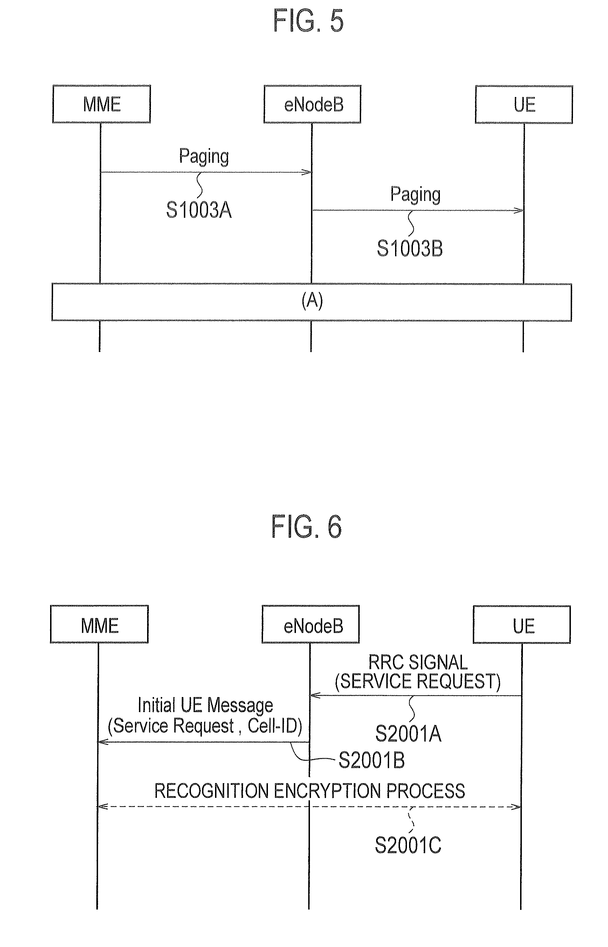

In step S1003, a "Network Triggered Service Request" procedure is performed as the MM process among the mobile management node MME, the radio base station eNodeB, and the mobile station UE. Here, the "Network Triggered Service Request" procedure is specifically performed as shown in Fig. 5.

As shown in Fig. 5, in step S1003A, the mobile management node MME transmits "Paging" addressed to the mobile station UE to the radio base station eNodeB, and in step S1003C, the radio base station eNodeB transmits "Paging" addressed to the mobile station UE to the mobile station UE.

Following this, in step S1003C, the procedure (A) is performed. Here, the procedure (A) is specifically performed as shown in Fig. 6.

As shown in Fig. 6, in step S2001A, the mobile station UE transmits an RRC signal including "Service Request" to the radio base station eNodeB, and in step S2001B, the radio base station eNodeB transmits "Initial UE Message" including the received "Service Request" and the Cell-ID of the mobile station UE to the mobile management node MME.

In step S2001C, the authentication encryption process is performed between the mobile management node MME and the mobile station UE.

Thus, in the MM process, specifically, in the "Network Triggered Service Request" procedure, the mobile management node MME acquires and stores the Cell-ID of the mobile station UE.

Next, as shown in Fig. 4, when the "Network Triggered Service Request" procedure finishes, the LCS process including step S1004 through step S1008 starts.

In step S1004, the mobile management node MME transmits "(LCS-NAS) Location Notification Invoke (positioning notification request)" to the mobile station UE.

In step S1005, the mobile station UE transmits "(LCS-NAS) Location Notification Return Result (positioning notification response)" to the mobile management node MME.

In step S1006, the mobile management node MME transmits "(LCS-AP) Location Request (positioning request)" including the Cell-ID of the mobile station UE acquired in the MM process, to the positioning calculation node E-SMLC.

In step S1007, the positioning calculation node E-SMLC executes the positioning process procedure "Positioning Procedure" of the mobile station UE using the received Cell-ID of the mobile station UE.

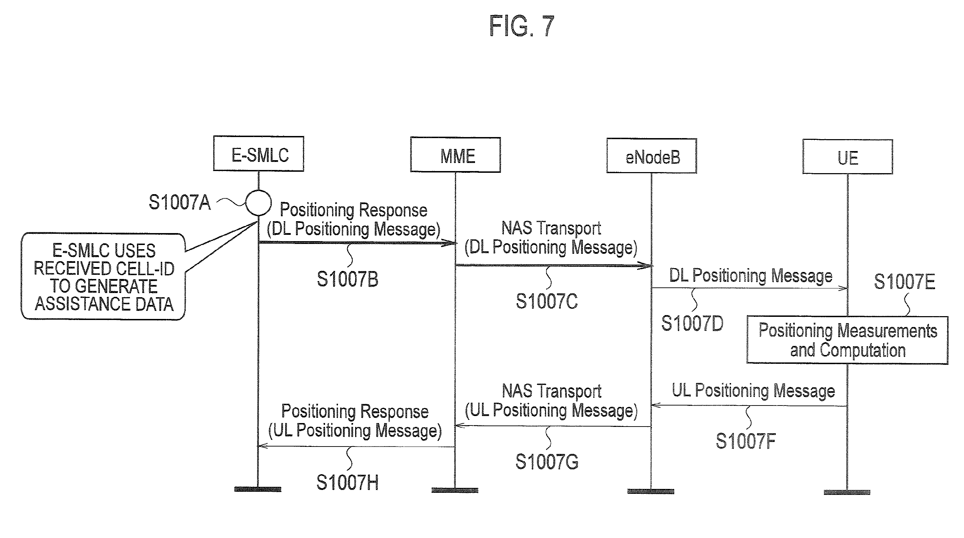

The positioning process procedure "Positioning Procedure" of the mobile station UE is performed as shown in Fig. 7.

As shown in Fig. 7, in step S1007A, the positioning calculation node E-SMLC transmits "Assistance Data", which is generated by using the Cell-ID of the mobile station UE and is a necessary parameter when the mobile station UE performs positioning, to the mobile station UE.

Note that the "Assistance Data" can also be notified to the mobile station UE by step S1007B through step S1007D.

In step 1007B, the positioning calculation node E-SMLC transmits "Positioning Request" including "DL Positioning Message", which is an LPP signal, to the mobile management node MME.

In step S1007C, the mobile management node MME transmits "NAS Transport" including the "DL positioning Message", to the radio base station eNodeB.

In step S1007D, the radio base station eNodeB transmits the "DL Positioning Message" to the mobile station UE.

In step S1007E, the mobile station UE performs positioning (for example, GPS positioning) of the mobile station UE using the "Assistance Data".

In step S1007F, the mobile station UE transmits "UL Positioning Message" including the positioning process result of the mobile station UE to the radio base station eNodeB.

In step S1007G, the radio base station eNodeB. transmits "NAS Transport" including the "UL positioning Message", to the mobile management node MME.

In step 1007H, the mobile management node MME transmits "Positioning Response" including the "UL Positioning Message" to the positioning calculation node E-SMLC.

When the positioning process procedure "Positioning Procedure" of the mobile station UE finishes, then in step S1008, the positioning calculation node E-SMLC transmits "Location Response (positioning response)" including the positioning process result of the mobile station UE (location information of the mobile station UE) to the mobile management node MME, as shown in Fig. 4.

When the LCS process finishes, then in step S1009, the mobile management node MME transmits "Provide Subscriber Location ack" including the positioning process result, and the like, to the node GMLC.

In step S1010, the "Common MT-LR" procedure of the PS/CS domain is performed among the LCS Client, the node GMLC, and the node HLR/HSS.

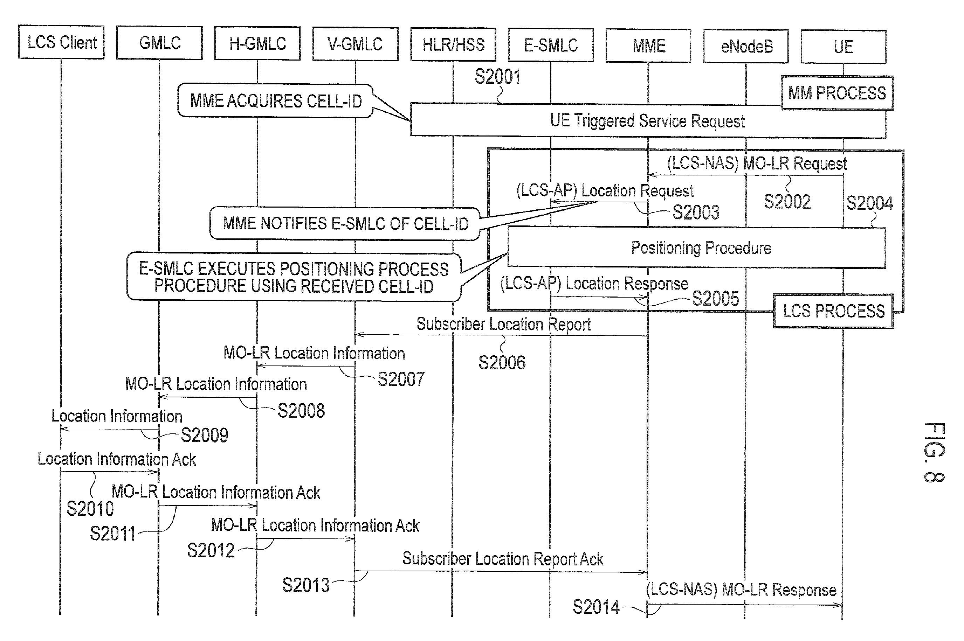

Secondly, an operation of "EPC Mobile Originating Location Request (EPC-MO-LR)" of the mobile communication system according to the first embodiment of the present invention is explained with reference to Fig. 6 through Fig. 8. In the example shown in Fig. 8, the mobile station UE is in a non-communicating state (idle state).

As shown in Fig. 8, in step S2001, a "UE Triggered Service Request" procedure is performed as the MM process among the mobile management node MME, the radio base station eNodeB, and the mobile station UE. Here, the "UE Triggered Service Request" procedure is specifically performed as shown in Fig. 6.

Thus, in the MM process, specifically, in the "UE Triggered Service Request" procedure, the mobile management node MME acquires and stores the Cell-ID of the mobile station UE.

Next, as shown in Fig. 4, when the "Network Triggered Service Request" procedure finishes, the LCS process including step S2002 through step S2005 starts.

In step S2002, the mobile station UE transmits "(LCS-NAS) MO-LR Request" to the mobile management node MME.

In step S2003, the mobile management node MME transmits "(LCS-AP) Location Request (positioning request)" including the Cell-ID of the mobile station UE acquired in the MM process (step S2001) to the positioning calculation node E-SMLC.

In step S2004, the positioning calculation node E-SMLC executes the positioning process procedure "Positioning Procedure" of the mobile station UE using the received Cell-ID of the mobile station UE.

The positioning process procedure "Positioning Procedure" of the mobile station UE is performed as shown in the above-described Fig. 7.

When the positioning process procedure "Positioning Procedure" of the mobile station UE finishes, then in step S2005, the positioning calculation node E-SMLC transmits "(LCS-AP) Location Response (positioning response)" including the positioning process result of the mobile station UE (location information of the mobile station UE) to the mobile management node MME, as shown in Fig. 8.

In step S2006, the mobile management node MME transmits "Subscriber Location Report" including the positioning process result of the mobile station UE to a node V-GMLC, and in step S2007, the node V-GMLC transmits "MO-LR Location Information" including the positioning process result of the mobile station UE to the node H-GMLC.

In step S2008, the node H-GMLC transmits the "MO-LR Location Information" including the positioning process result of the mobile station UE to the node GMLC, and the node GMLC transmits "Location Information" including the positioning process result of the mobile station UE to the LCS Client.

In step S2010, the LCS Client transmits "Location information Ack" to the node GMLC, and in step S2011, the node GMLC transmits "MO-LR Location Information Ack" to the node H-GMLC.

In step S2012, the node H-GMLC transmits the "MO-LR Location Information Ack" to the node V-GMLC, and in step S2013, the node V-GMLC transmits "Subscriber Location Report Ack" to the mobile management node MME.

In step S2014, the mobile management node MME transmits "NAS MO-LR Response" including the positioning process result of the mobile station UE to the mobile station UE.

According to the mobile communication system of the first embodiment of the present embodiment, as a result of association between the MM process and the LCS process, the Cell-ID of the mobile station UE acquired by the mobile management node MME in the MM process can be notified to the positioning calculation node E-SMLC.

### (Mobile communication system according to second embodiment of the present invention)

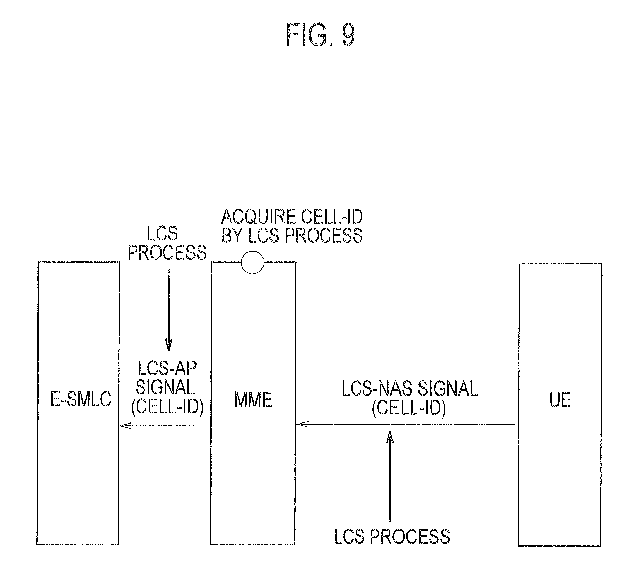

A mobile communication system according to a second embodiment of the present invention is described with reference to Fig. 9 through Fig. 12. Hereinafter, the mobile communication system according to the second embodiment of the present invention will be described while focusing on the difference from the mobile communication system according to the first embodiment as described above.

Next, an outline of a function of a mobile management node MME according to the present embodiment is explained with reference to Fig. 9.

As shown in Fig. 9, an LCS processing unit of the mobile management node MME is configured to receive an LCS-NAS signal including Cell-ID of a mobile station UE from the mobile station UE in an LCS process.

Furthermore, the LCS processing unit of the mobile management node MME is configured to transmit, to the positioning calculation node E-SMLC, an LCS-AP signal including the Cell-ID of the mobile station UE included in the LCS-NAS signal received according to LCS, in the LCS process.

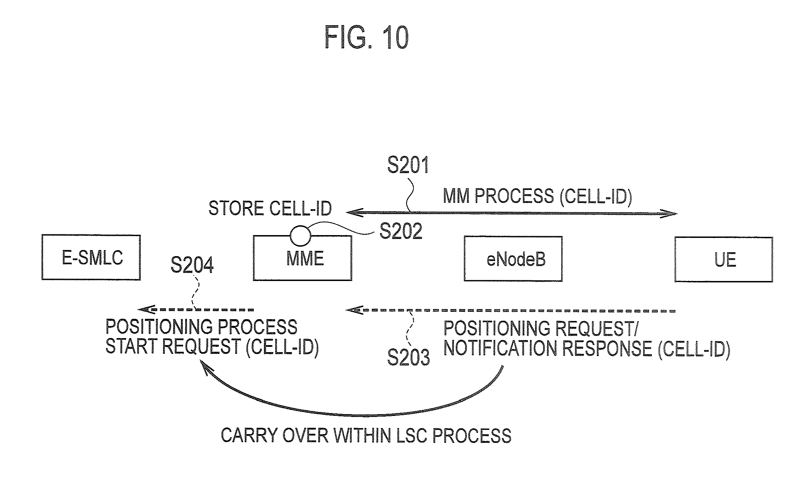

Here, an outline of the operation of the mobile communication system according to the second embodiment of the present invention is explained with reference to Fig. 10.

As shown in Fig. 10, in step S201, an MM process is performed between the mobile management node MME and the mobile station UE, and in step S202, the mobile management node MME acquires and stores the Cell-ID of the mobile station UE.

Following this, in step S203, the mobile management node MME receives a positioning request or a positioning notification response including the Cell ID of the mobile station UE from the mobile station UE, and in step S204, the mobile management node MME transmits a positioning process start request including the Cell-ID of the mobile station UE received in step S203 rather than the Cell-ID of the mobile station UE stored in step S102 to the positioning calculation node E-SMLC.

The positioning calculation node E-SMLC performs a positioning process of the mobile station UE by using the Cell-ID of the mobile station UE included in the received positioning process start request.

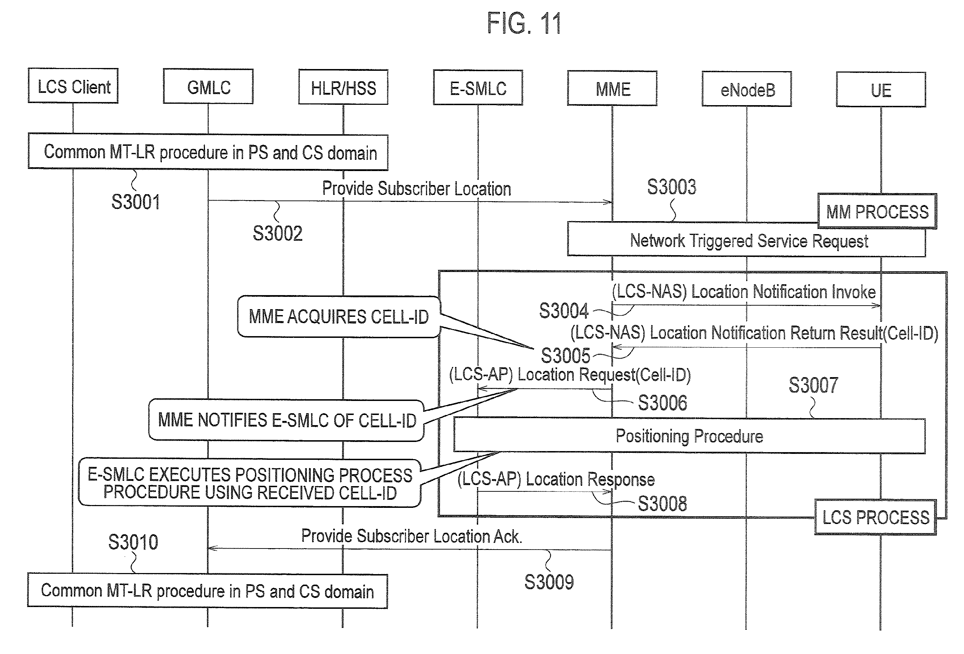

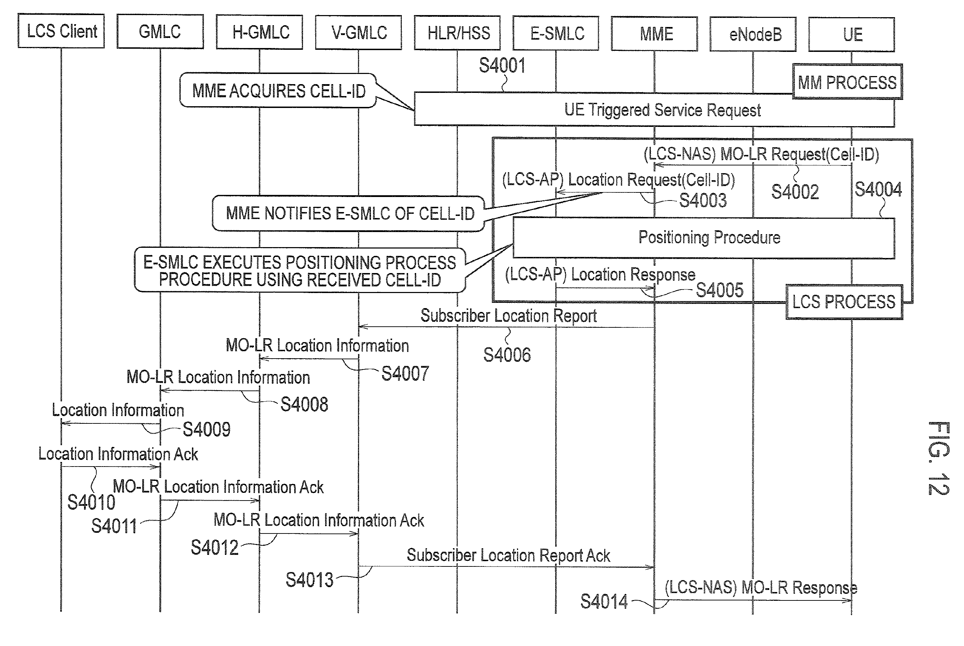

Hereinafter, the details of the operation of the mobile communication system according to the second embodiment of the present invention are explained with reference to Fig. 11 and Fig. 12.

Firstly, an operation of "EPC Mobile Terminating Location Request (EPC-MT-LR)" of the mobile communication system according to the second embodiment of the present invention is explained with reference to Fig. 11. In the example shown in Fig. 11, the mobile station UE is in a non-communicating state (idle state).

As shown in Fig. 11, the operation of step S3001 through step S3003 is the same as the operation of step S1001 through step S1003 shown in Fig. 4.

In step S3004, the mobile management node MME transmits "(LCS-NAS) Location Notification Invoke (positioning notification request)" to the mobile station UE.

In step S3005, the mobile station UE transmits "(LCS-NAS) Location Notification Return Result (positioning notification response)" including the Cell-ID of the mobile station UE to the mobile management node MME.

Note that when the positioning of the mobile station UW is not allowed, the "(NAS) Location Notification Return Result (positioning notification response)" does not include the Cell-ID of the mobile station UE.

In step S3006, the mobile management node MME transmits "(LCS-AP) Location Request (positioning request)" including the Cell-ID of the mobile station UE acquired by the mobile management node MME to the positioning calculation node E-SMLC.

Hereinafter, the operation of step S3007 through step S3010 is the same as the operation of step S1007 through step S1010 shown in Fig. 4.

Secondly, an operation of "EPC Mobile Originating Location Request (EPC-MO-LR)" of the mobile communication system according to the second embodiment of the present invention is explained with reference to Fig. 12. In the example shown in Fig. 12, the mobile station UE is in a non-communicating state (idle state).

As shown in Fig. 12, the operation of step S4001 is the same as the operation of step S2001 shown in Fig. 8.

In step S4002, the mobile station UE transmits "(LCS-NAS) MO-LR Request" including the Cell-ID of the mobile station UE to the mobile management node MME.

In step S4003, the mobile management node MME transmits "(LCS-AP) Location Request (positioning request)" including the Cell-ID of the mobile station UE acquired in step S4002 to the positioning calculation node E-SMLC.

Hereinafter, the operation of step S4004 through step S4014 is the same as the operation of step S2004 through step S2014 shown in Fig. 8.

According to the mobile communication system of the second embodiment of the present invention, the Cell-ID of the mobile station UE can be notified to the positioning calculation node E-SMLC only in the LCS process independent from the MM process, and thus, the complexity of the process of the mobile management node MME can be avoided.

Furthermore, according to the mobile communication system of the second embodiment of the present invention, even when the mobile station UE performs a movement involving a change in the Cell-ID within the radio base station eNodeB, the mobile station UE can notify the positioning calculation node E-SMLC of the most recent Cell-ID held by the mobile station UE.

The characteristics of the present embodiment as described above may be expressed as follows.

A first characteristic of the present embodiment is summarized as a mobile communication method including: a step of acquiring and storing, by a mobile management node MME, Cell-ID (cell ID) for identifying a cell in which a mobile station UE exists, in an MM process (mobile management process); a step of transmitting, by the mobile management node MME, a positioning process start request (positioning process signal) "Location Request" including the stored Cell-ID to a positioning calculation node E-SMLC, in an LCS process (location information provision service process); and a step of performing, by the positioning calculation node E-SMLC, a positioning process of the mobile station UE, using the Cell-ID included in the received positioning process start request "Location Request", in the LCS process.

A second characteristic of the present embodiment is summarized as a mobile communication method including: a step A of acquiring, by a mobile management node MME, Cell-ID for identifying a cell in which a mobile station UE exists, in an LCS process; a step B of transmitting, by the mobile management node MME, a positioning process start request "Location Request" including the acquired Cell-ID to a positioning calculation node E-SMLC, in the LCS process; and a step C of performing, by the positioning calculation node E-SMLC, a positioning process of the mobile station UE using the Cell-ID included in the received positioning process start request "Location Request", in the LCS process.

In the second characteristic of the present embodiment, the step A may also include a step of transmitting, by the mobile station UE, a positioning notification response "(NAS) Location Notification Return Result" including the Cell-ID, to the mobile management node MME, depending on a positioning notification request "(NAS) Location Notification Invoke" from the mobile management node MME.

In the second characteristic of the present embodiment, the step A may also include a step of transmitting, by the mobile station UE, a positioning request "MO-LR Request" including the Cell-ID, to the mobile management node MME.

A third characteristic of the present embodiment is summarized as a mobile management node MME including an MM process function (mobile management process function) configured to acquire and store Cell-ID for identifying a cell in which a mobile station UE exists, in an MM process, and an LCS process function (location information provision service process function) configured to transmit a positioning process start request "Location Request" including the Cell-ID stored in the MM process function to a positioning calculation node E-SMLC configured to perform a positioning process of the mobile station UE, in an LCS process.

A fourth characteristic of the present embodiment is summarized as a mobile management node MME including an LCS process function configured to acquire Cell-ID for identifying a cell in which a mobile station UE exists, and then transmit a positioning process start request "Location Request" including the acquired Cell-ID to a positioning calculation node E-SMLC configured to perform a positioning process of the mobile station UE, in an LCS process.

In the fourth characteristic of the present embodiment, the LCS process function may also be configured to transmit a positioning notification request "(NAS) Location Notification Invoke" to the mobile station UE, and then receive a positioning notification response "(NAS) Location Notification Return Result" including the Cell-ID transmitted by the mobile station UE depending on the positioning notification request "(NAS) Location Notification Invoke", in the LCS process.

In the fourth characteristic of the present embodiment, the LCS process function may also be configured to receive a positioning request "NAS MO-LR Request" including the Cell-ID transmitted by the mobile station UE, in the LCS process.

A fifth characteristic of the present embodiment is summarized as a mobile station UE including an LCS process function configured to receive a positioning notification request "(NAS) Location Notification Invoke" transmitted by a mobile management node MME, and then transmit a positioning notification response "(NAS) Location Notification Return Result" including the fact that positioning is allowed, when positioning of the mobile station UE is allowed, and Cell-ID for identifying a cell in which the mobile station UE exists to the mobile management node MME, or transmit a positioning notification response "(NAS) Location Notification Return Result" including the fact that positioning is not allowed, when positioning of the mobile station UE is not allowed, to the mobile management node MME, in an LCS process.

In addition, the operation of the above-mentioned the mobile station UE, radio base station eNode B, the mobile management node MME or the node E-SMLC may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

Such a storage medium is connected to the processor so that the processor can write and read information into and from the storage medium. Such a storage medium may also be accumulated in the processor. Such storage medium and processor may be arranged in an ASIC. Such ASIC may be arranged in the mobile station UE, radio base station eNode B, the mobile management node MME or the node E-SMLC. As a discrete component, such storage medium and processor may be arranged in the mobile station UE, radio base station eNode B, the mobile management node MME or the node E-SMLC.

Thus, the present invention has been specifically explained by using the above-mentioned embodiments; however, it is obvious that for persons skilled in the art, the present invention is not limited to the embodiments explained herein. The present invention can be implemented as corrected and modified modes without departing from the gist and the scope of the present invention defined by the claims. Therefore, the description of the specification is intended for explaining the example only and does not impose any limited meaning to the present invention.

## Claims

1. A mobile communication method, comprising:
a step A of acquiring, by a mobile management node, a cell ID for identifying a cell in which a mobile station exists, in a location information provision service process;
a step B of transmitting, by the mobile management node, a positioning process signal including the acquired cell ID, to a positioning calculation node, in the location information provision service process; and
a step C of performing, by the positioning calculation node, a positioning process of the mobile station, using the cell ID included in the received positioning process signal, in the location information provision service process.

2. A mobile management node, comprising: a location information provision service process function configured to acquire a cell ID for identifying a cell in which a mobile station exists, and then transmit a positioning process signal including the acquired cell ID to a positioning calculation node configured to perform a positioning process of the mobile station, in a location information provision service process.
